# FASCICULE DE BREVET EUROPEEN

(11) **EP 3 891 087 B1**
(45) Date de publication et mention de la délivrance du brevet: **21.02.2024**
(21) Numéro de dépôt: 19842380.8
(22) Date de dépôt: 03.12.2019
(51) Int. Cl.: B65G 29/00, B65G 43/08, B65G 47/84, B65G 47/82, B07C 5/36, B65B 57/00

(54) **DISPOSITIF, INSTALLATION ET PROCEDE D'EJECTION DE PRODUITS**
VORRICHTUNG, ANLAGE UND VERFAHREN ZUM AUSSTOSSEN VON PRODUKTEN
DEVICE, FACILITY AND METHOD FOR EJECTING PRODUCTS

(30) Priorité: 04.12.2018 FR 1872269
(43) Date de publication de la demande: 13.10.2021
(73) Titulaire: Sidel Participations, 76930 Octeville-sur-Mer (FR)
(72) Inventeur: PICHOT, Yann, 76930 OCTEVILLE SUR MER (FR); SOUFFES, Denis, 76930 Octeville-sur-mer (FR); MICHEL, Jocelyn, 76930 OCTEVILLE SUR MER (FR)
(74) Mandataire: Sidel Group
(86) Numéro de dépôt international: PCT/FR2019/052900
(87) Numéro de publication internationale: WO 2020/115421

(56) Documents cités:
- NL-A- 7 403 396
- US-A- 2 085 410
- US-A- 3 014 574
- US-A- 3 301 399
- US-A- 3 710 922

## Description

La présente invention entre dans le domaine de la production et du traitement de produits au sein d'une ligne industrielle.

De tels produits peuvent être des préformes, bouteilles, cannettes, flacons, boîtes, caisses, cartons ou fardeaux, en tout type de matériau, notamment en verre ou en plastique, voire cartonné. De tels produits sont généralement destinés à contenir des liquides, notamment agroalimentaire.

Au sein d'une telle ligne industrielle, les produits peuvent recevoir plusieurs traitements successifs différents, allant de la fabrication du contenant par exemple par une opération d'étirage-soufflage jusqu'au conditionnement en caisses ou fardeaux de plusieurs produits regroupés, en passant par le remplissage et l'étiquetage des produits à l'unité.

Dans ce contexte, les produits sont successivement pris en charge par des postes de traitement, comme par exemple un poste de soufflage approvisionné en préforme pour fabriquer des bouteilles, suivi d'un poste de remplissage puis d'un poste d'étiquetage, ou inversement, avant un éventuel poste de fardelage des produits finis en lots. L'invention trouvera son application dans le traitement de produits à l'unité.

Dans ce contexte, au sein d'un poste de traitement à l'unité, les produits sont acheminés successivement, à la file les uns derrière les autres, depuis l'extérieur vers l'intérieur dudit poste, puis de l'intérieur vers l'extérieur, notamment par des convoyeurs adaptés. A l'intérieur du poste, les produits peuvent être pris en charge par des moyens de déplacement propres audit poste. En particulier, de tels moyens peuvent se présenter sous la forme d'un carrousel rotatif, pourvu à intervalles angulaires réguliers de moyen aptes à maintenir les produits lors de leur déplacement, comme par exemple des moyens de préhension d'une partie de chaque produit, notamment en partie supérieure comme le col ou le goulot.

Pour de multiples raisons, notamment pour un dysfonctionnement d'un poste situé en amont, il peut être nécessaire d'extraire certains produits non conformes du flux de production. De façon similaire, en cas de dysfonctionnement de toute ou partie d'un poste en aval, comme par exemple un bec de remplissage fonctionnant mal sur une remplisseuse, il est peut-être nécessaire d'éjecter toute ou partie des produits arrivant au niveau de ce poste aval. Pour ce faire, on procède à une éjection desdits produits. Actuellement, une solution mise en oeuvre consiste en un dispositif d'éjection pourvu d'un poussoir mobile en translation depuis une position escamotée vers une position d'éjection, et inversement. Le document US 3 014 574 A divulgue un dispositif d'éjection selon le préambule de la revendication 1 et un procédé selon le préambule de la revendication 7. En position d'éjection, le poussoir se déplace jusqu'à croiser la trajectoire de circulation du flux de produits, pour les percuter et les dévier vers une autre trajectoire, orientée vers l'extérieur du circuit de production.

Un tel poussoir peut se présenter sous forme d'une paroi inclinée ou arrondie, généralement de façon divergente depuis la trajectoire de circulation et dans le sens de progression des produits. Dès lors, en position d'éjection, les produits viennent au contact de la paroi et glissent longitudinalement jusqu'à sortir de leur trajectoire initiale vers l'extérieur. De plus, la déviation le long de la paroi assure l'extraction en force du maintien des produits, en particulier par les moyens de préhension.

Par ailleurs, le poussoir est généralement actionné en déplacement par une motorisation de type pneumatique, avec un ou plusieurs vérins pneumatiques, ayant la réactivité et la force requises pour, d'une part, se déplacer depuis la position escamotée vers la position d'éjection, et d'autre part, assurer l'extraction d'un produit maintenu. En outre, la motorisation à vérin pneumatique est adaptée pour l'éjection de produits d'une masse élevée, dépassant souvent le kilogramme pour un produit de type bouteille rempli de fluide ou liquide.

Une telle éjection pneumatique le long d'une paroi présente toutefois une réactivité limitée, notamment en raison de la force nécessaire au déploiement de son vérin et de son inertie en position déployée, notamment en raison de sa structure rigide prévue pour pouvoir éjecter des produits lourds. En raison de la dynamique, la paroi reste déployée pendant un laps de temps donné, empêchant son retour immédiat en position escamotée. Dès lors, plusieurs produits peuvent être éjectés à la suite, alors qu'un seul produit non conforme devait être éjecté, du fait de la lenteur d'un tel dispositif, surtout à des cadences élevées, provoque souvent l'éjection de plusieurs produits successifs.

En particulier, il arrive souvent qu'un dysfonctionnement provienne d'un seul poste amont parmi plusieurs approvisionnant régulièrement le poste pourvu du dispositif d'éjection. Dès lors, un produit non conforme doit être éjecté à intervalles réguliers dans le flux de production. La solution pneumatique existante entraîne souvent l'éjection de produits valides, ce qui cause une perte conséquente et inutile, mais aussi préjudiciables aux autres postes situés en aval, recevant alors une quantité réduite de produits, allant jusqu'à diminuer le rendement de l'intégralité de la ligne industrielle.

Par ailleurs, en cas de problème survenant au niveau du poste ou du dispositif d'éjection, un arrêt d'urgence ne permet pas au dispositif pneumatique de rester en position d'éjection, ce qui peut être problématique le temps nécessaire à la décélération du carrousel entraînant les produits jusqu'à son arrêt complet. En effet, les produits qui doivent être éjectés restent dans le flux de production et doivent être retirés manuellement.

En outre, le fonctionnement pneumatique engendre un environnement sonore bruyant, surtout en raison des arrêts en butée des vérins pneumatiques. De plus, le déplacement brusque du poussoir contre les produits peut être préjudiciables à leur intégrité, pouvant les casser et répandre leur contenu, ce qui nécessite un arrêt de la production en vue du nettoyage.

L'invention a pour but de pallier les inconvénients de l'état de la technique en proposant un dispositif d'éjection de produits comprenant des moyens rotatifs d'extraction sous forme de plateau.

Un tel plateau présente un bord périphérique et au moins un logement ménagé dans ce bord périphérique, de préférence plusieurs logements. Au cours de sa rotation, voire à l'arrêt, le bord périphérique traverse la trajectoire de circulation des produits en vu d'en éjecter un ou plusieurs, tandis que chaque logement permet d'accompagner un seul produit se déplaçant le long de ladite trajectoire de circulation. Ainsi, en synchronisant ou en déphasant la rotation du plateau par rapport à la circulation des produits, le dispositif d'éjection permet d'extraire un produit à la fois ou d'en laisser passer plusieurs à la suite, à l'intérieur de chacun de ses logements.

Pour ce faire, un tel dispositif d'éjection est implanté au sein d'une unité de traitement desdits produits, un flux desdits produits se déplaçant les uns derrière les autres selon une trajectoire de circulation.

Ledit dispositif d'éjection comprend au moins :
- un moyen d'éjection à l'unité d'un produit hors de ladite trajectoire de circulation ;
- des moyens de motorisation du moyen d'éjection,
   caractérisé en ce que
- ledit moyen d'éjection comprend au moins un plateau avec un bord périphérique pourvu d'au moins un logement de réception d'un unique produit ;
- lesdits moyens de motorisation comprenant un entraînement en rotation dudit plateau et des moyens de synchronisation dudit entraînement avec le flux desdits produits, en vue de positionner angulairement à un instant donné le bord périphérique en croisement de la trajectoire de circulation ou bien de positionner un desdits logement au passage d'un produit se déplaçant à cet endroit en suivant la trajectoire de circulation.

De façon additionnelle mais non limitative, ledit plateau peut comprendre au moins trois logements répartis régulièrement le long du bord périphérique.

Chaque logement peut présenter une concavité conformée complémentairement à au moins une partie de la forme de chacun desdits produits, de manière à introduire au moins partiellement ladite partie de ladite forme à l'intérieur dudit logement.

Lesdits moyens de motorisation peuvent comprendre un moteur rotatif avec un arbre de transmission soutenant ledit plateau au travers d'au moins un roulement et/ou d'un réducteur.

Lesdits moyens de motorisation peuvent comprendre un moyen de verrouillage dudit plateau dans une position d'éjection desdits produits.

L'invention concerne aussi une installation au sein d'un ligne industrielle de production et de traitement de produits, comprenant :
- au moins un convoyeur déplaçant selon une trajectoire de circulation lesdits produits les uns derrière les autres sous forme d'un flux de produits ;
- au moins un dispositif d'éjection desdits produits selon l'invention,
- chaque dispositif d'éjection étant positionné aux abords dudit convoyeur, caractérisé par le fait que chaque plateau de chaque dispositif d'éjection est positionné au moins:
- selon une position angulaire d'éjection d'un produit, avec son bord périphérique qui s'étend au moins partiellement en croisement de ladite trajectoire de circulation dudit convoyeur ;
- selon une autre position angulaire d'accompagnement d'un produit, avec au moins un logement avec une concavité laissant au moins partiellement libre ladite trajectoire de circulation dudit convoyeur.

L'invention concerne encore un procédé d'éjection de produits au sein d'une unité de de traitement desdits produits, dans lequel :
- un flux de produits est déplacé les uns derrière les autres à intervalle régulier est déplacé selon une trajectoire de circulation ;
- on positionne à un endroit de ladite trajectoire de circulation au moins un dispositif d'éjection comprenant au moins un plateau avec un bord périphérique pourvu d'au moins un logement de réception d'un unique produit ;
- on entraîne en rotation ledit plateau ;

caractérisé par le fait que, au moins :
   - on positionne ledit plateau avec le bord périphérique en croisement de ladite trajectoire de circulation ;
et par le fait qu'on entraîne la rotation dudit plateau par rapport au déplacement dudit flux de produits :
   - de façon synchronisée, en positionnant angulairement un logement de façon sensiblement tangentielle à ladite trajectoire de circulation, de manière à accompagner le déplacement d'un produit à l'intérieur dudit logement ;
      ou
de façon déphasée, en positionnant angulairement un logement dans un intervalle entre deux produits se succédant, de manière à éjecter le produit situé en aval par rapport au sens de déplacement dudit flux.

De façon additionnelle, non limitativement, de façon synchronisée, on peut positionner le bord périphérique dans un intervalle entre deux produits se succédant.

D'autres caractéristiques et avantages de l'invention ressortiront de la description détaillée qui va suivre des modes de réalisation non limitatifs de l'invention, en référence aux figures annexées dans lesquelles :
[Fig. 1] représente schématiquement une vue en perspective d'un mode de réalisation d'un dispositif d'éjection ;
[Fig. 2] représente schématiquement une vue de dessus d'un plateau du dispositif d'éjection selon un mode de réalisation,
[Fig. 3] représente schématiquement une vue de dessus d'un autre mode de réalisation d'un plateau ;
[Fig. 4] représente schématiquement une vue de dessus d'un mode de réalisation, montrant le plateau dans une position angulaire d'accompagnement d'un produit ; et [Fig. 5] représente schématiquement une vue similaire à la figure 4, montrant le plateau dans une position angulaire d'éjection d'un produit par contact avec le bord périphérique ; et
[Fig. 6] représente schématiquement une vue similaire à la figure 5, montrant le plateau dans une autre position angulaire d'éjection d'un produit par contact avec le bord intérieur d'un logement.

La présente invention concerne la production et le traitement de produits 1 au sein d'une ligne industrielle, en particulier au sein d'une unité de traitement d'une telle ligne industrielle.

De tels produits peuvent être des bouteilles ou des flacons, de préférence des produits possédant un col, en tout type de matériau, notamment en verre ou en plastique, voire cartonné. De tels produits sont généralement destinés à contenir des liquides, notamment agroalimentaire.

Une telle ligne industrielle comprend au moins une installation. Ladite installation est pourvue d'au moins un convoyeur. Il assure le transport des produits 1 sur au moins une partie de la longueur de ladite installation. Ledit convoyeur déplace les produits 1 les uns derrière les autres, à intervalle régulier, formant un flux de circulation desdits produits 1. C'est l'espace entre les produits 1 qui détermine alors l'intervalle du flux.

A titre d'exemple, un tel convoyeur peut être à bande sans fin, le fond des produits 1 reposant en surface du convoyeur. Ledit convoyeur peut comprendre des navettes supportant chacune un produit 1, lesdites navettes étant déplacées indépendamment ou non le long dudit convoyeur. C'est l'espace entre les navettes qui détermine alors l'intervalle entre les produits 1 du flux.

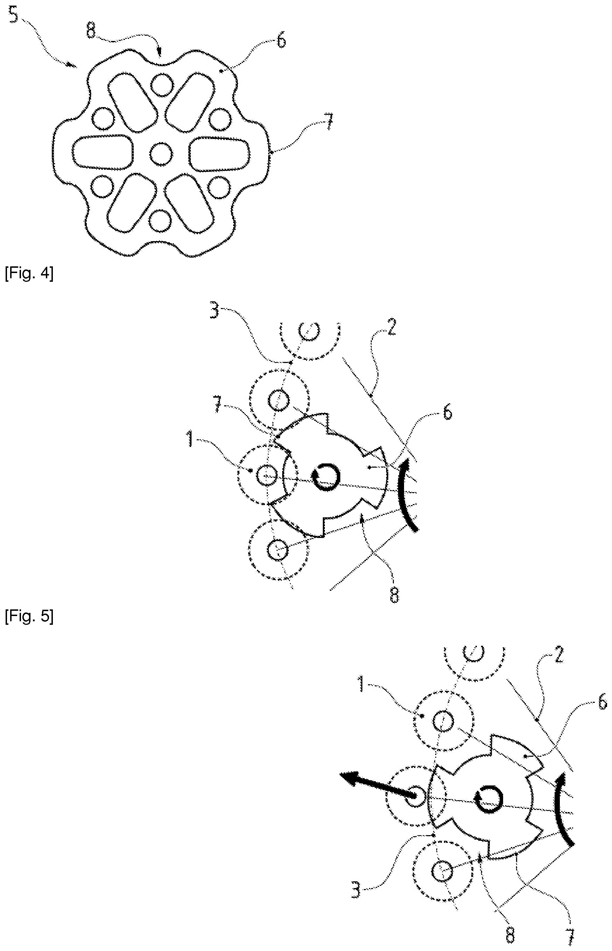

Préférentiellement, ledit convoyeur est de type rotatif et peut comprendre un carrousel 2 pourvu d'une pluralité de moyens de préhension d'un unique produit 1, comme par exemple une pince venant saisir et maintenir une partie d'un produit 1, notamment le corps du produit 1, voire le col dans le cas d'un produit 1 de type récipient, comme un flacon ou d'une bouteille. Dès lors, c'est l'espacement entre les moyens de préhension qui détermine l'intervalle entre les produits 1 du flux. Un exemple de convoyeur de type rotatif est représenté partiellement de façon simplifiée sur les figures 4 à 6.

Dans un cas comme dans l'autre, le flux présente un intervalle régulier entre les produits 1, qui sont espacés approximativement de la même distance. L'invention pourra s'adapter à un intervalle irrégulier entre les produits 1.

Ledit convoyeur peut être situé en entrée ou en sortie d'un poste ou d'une unité de traitement des produits 1, ou bien entre deux postes successifs, au sein de ladite installation. A titre d'exemple non limitatif, le convoyeur peut être une roue de transfert de produits, notamment des préformes ou des récipients comme des bouteilles, notamment ladite roue étant située en entrée d'un poste d'étirage-soufflage desdites préformes en vue de fabriquer des récipients, en sortie d'un poste d'étirage-soufflage pour évacuer les récipients ainsi fabriqués, ou bien en entrée, en sortie ou au sein d'une remplisseuse ou d'une étiqueteuse.

Ainsi, les produits 1 sont déplacés selon une trajectoire 3 de circulation, par l'intermédiaire du au moins un convoyeur.

A ce titre, ladite trajectoire 3 de circulation du flux de produits 1 est une trajectoire moyenne que suivent sensiblement tous les produits dudit flux sur une distance donnée au sein de l'installation. Cette trajectoire 3 peut correspondre au chemin parcouru par un point déterminé de chaque produit 1 lors de son déplacement, comme par exemple son centre de gravité ou un point de sa paroi périphérique, notamment un point de son goulot.

Un exemple de trajectoire 3 de circulation de produits 1 est représenté sur les figures 4 à 6, ladite trajectoire de circulation correspondant au déplacement des centres des goulots (représentés en cercle plein) des récipients (dont les corps sont représentés selon des cercles pointillés).

Comme évoqué précédemment, en cas de dysfonctionnement d'un poste de traitement ou pour tout autre raison inhérente au fonctionnement de l'installation, comme par exemple un échantillonnage, il doit être nécessaire d'extraire au moins un produit 1 du flux de circulation, voire plusieurs produits 1, surtout s'ils sont non conformes.

Pour ce faire, l'invention concerne un dispositif d'éjection 4 de produits 1 au sein de la ligne industrielle de production et de traitement desdits produits 1. Un tel dispositif assure l'éjection à l'unité d'un produit 1 hors de ladite trajectoire de circulation. Il permet donc de sortir un produit 1 à la fois du flux. Chaque produit 1 éjecté peut se retrouver dans une autre circulation, par exemple pour un échantillonnage, ou bien envoyé vers un espace de stockage prévu à cet effet. Pour ce faire, le dispositif d'éjection 4 comprends un moyen d'éjection 5 à l'unité d'un produit 1 hors de ladite trajectoire de circulation.

Dans l'installation, chaque dispositif d'éjection 4 est positionné aux abords dudit convoyeur. Un dispositif d'éjection 4 peut être situé sur un côté, au-dessus ou en dessous du convoyeur, certains de ses éléments constitutifs pouvant dépasser d'un côté, au-dessus ou en dessous de toute ou partie du convoyeur. En particulier, ledit moyen d'éjection 5 est situé au-dessus ou en dessous du convoyeur, préférentiellement au-dessus d'un convoyeur à bande ou en dessous d'un carrousel. Avantageusement, ledit moyen d'éjection 5 comprend au moins un plateau 6. Un tel plateau 6 peut présenter une forme globalement circulaire. Il peut se présenter sous forme d'un disque, ajouré intérieurement, afin d'économiser de la matière et de diminuer sa masse. Le plateau 6 peut être en tout type de matériau, préférentiellement en métal, notamment en acier ou en aluminium.

C'est le plateau 6 qui permet donc d'éjecter au moins un produit 1 à la fois depuis la trajectoire 3 de circulation. Le plateau 6 peut donc au moins en partie croiser la trajectoire 3 de circulation.

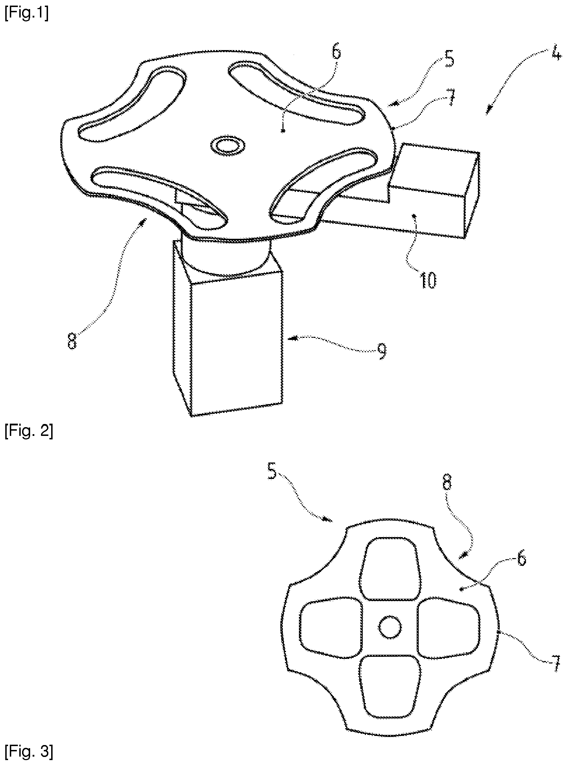

Pour ce faire, le plateau 6 comprend un bord périphérique 7 pourvu d'au moins un logement 8 de réception d'un unique produit 1. De préférence, le plateau 6 comprend plusieurs logements 8, notamment au moins trois logements 8. Les logements 8 peuvent être répartis régulièrement ou non le long dudit bord périphérique 7. Comme visible sur les exemples des figures 1 à 3, le plateau 6 peut comprendre un nombre pair de logements 8, symétriquement répartis par paire, diamétralement opposée, permettant de conférer un équilibre du plateau 6 lors de son fonctionnement. Plusieurs exemples non limitatifs de différents plateaux 6, avec différentes formes de logements 8, ainsi que de nombre de logements 8, sont visible sur les figures 1 à 3. Sur ces figures, plusieurs logements 8 sont séparés par une portion de longueur du bord périphérique 7.

Un plateau 6 peut avoir des logements 8 avec des formes différentes ou préférentiellement identiques. La forme de chaque logement 8, notamment sa courbure, peut être déterminée, de façon non exhaustive, en fonction de la cadence de circulation des produits 1 à ce niveau de l'installation, la forme des produits 1 ou de plusieurs formats de produits 1 susceptibles d'être traités par la même installation. Selon un mode de réalisation, chaque logement 8 peut présenter une concavité. Elle est ménagée depuis l'extérieur vers l'intérieur du plateau 6. Chaque concavité est conformée complémentairement à au moins une partie de la forme de chacun desdits produits 1, de manière à introduire au moins partiellement ladite partie de ladite forme à l'intérieur dudit logement 8. En d'autres termes, la concavité d'un logement 8 permet de recevoir une partie d'un produit 1, notamment une partie de son goulot ou bien une partie de son corps ou de sa paroi latérale. Un seul produit 1 peut s'insérer partiellement dans un logement 8. Un logement 8 permet donc d'accompagner un produit 1 lors de son déplacement par le convoyeur le long de la trajectoire 3 de circulation.

Pour ce faire, dans l'installation selon l'invention, chaque plateau 6 de chaque dispositif d'éjection 4 est positionné spécifiquement par rapport au reste de l'installation, en particulier par rapport au convoyeur. Au moins deux positions sont possibles.

D'une part, selon une position angulaire d'éjection d'un produit 1, le plateau 6 est positionné avec son bord périphérique 7 qui s'étend au moins partiellement en croisement de ladite trajectoire 3 de circulation dudit convoyeur. En d'autres termes, le plateau 6 est placé par rapport au convoyeur, pour que son bord périphérique 7 traverse la trajectoire 3 de circulation, au-dessus ou en dessous en fonction du type de convoyeur. Dès lors, tout produit 1 qui circule vient au contact du bord périphérique 7, qui forme un obstacle, et chaque produit 1 est déporté de sa trajectoire initiale, sortant du flux.

D'autre part, selon une autre position angulaire d'accompagnement d'un produit 1, le plateau 6 est positionné avec au moins un logement 8 avec sa concavité laissant au moins partiellement libre ladite trajectoire 3 de circulation dudit convoyeur. En d'autres termes, dans cette autre position, le déplacement d'un produit 1 n'est pas interrompu par le plateau 6 ou son bord périphérique 7, puisque le produit 1 entre au moins partiellement dans un logement 8, sans rencontrer d'obstacle.

D'autres positionnement du dispositif d'éjection 4 peuvent être envisagés, en fonction des autres positions angulaires du plateau 6, notamment pour qu'un logement 8 présente son bord ou son chant situé en aval par rapport au sens de circulation, en croisement de la trajectoire 3 de circulation : le produit 1 partiellement inséré dans ledit logement 8 vient alors taper contre ce bord aval et être éjecté. Ce n'est plus le bord périphérique 7 mais la fin du logement 8 qui forme obstacle à la progression d'un produit 1 lors de son déplacement.

Dans un cas comme dans un autre, l'appui peut s'effectuer par appui contre un produit 1 dans une zone où se situe son centre de gravité, afin d'assurer son éjection et en minimisant les risques de le faire basculer ou bien de la faire pivoter autour de son moyen de préhension dans le cas d'un convoyeur de type carrousel. A titre d'exemple, une bouteille vide en matériau plastique peut comprendre un centre de gravité situé dans le tiers supérieur et il est alors possible de positionner le plateau 6 pour qu'il vienne en appui dans cette zone.

Dans le cas d'une bouteille remplie d'un liquide ou d'un fluide, le centre de gravité est abaissé et le contact peut s'opérer dans une zone située inférieurement au tiers supérieur.

Préférentiellement, l'appui s'effectue contre le col d'un produit de type bouteille, à l'endroit le plus rigide, surtout quand elle est vide.

C'est donc en fonction de la rotation du moyen d'éjection 5, que le dispositif d'éjection 4 permet d'évacuer un produit 1 du flux ou de le laisser passer pour qu'il poursuive le long de la trajectoire 3 de circulation.

Le dispositif d'éjection 4 comprend des moyens de motorisation 9 du moyen d'éjection 5.

Les moyens de motorisation 9 peuvent être situés à un autre emplacement, par rapport au moyen d'éjection 5, reliés par une transmission adaptée. Selon le mode de réalisation représenté sur la figure 1, les moyens de motorisation 9 sont positionnés sous le plateau 6.

Avantageusement, le dispositif d'éjection 4 est prévu rotatif. Pour ce faire, lesdits moyens de motorisation 9 comprennent un entraînement en rotation dudit plateau 6. Selon un mode de réalisation, lesdits moyens de motorisation 9 peuvent comprendre un moteur rotatif, de préférence un moteur synchrone, notamment de type « brushless », qui permet de connaître à tout instant la position angulaire de son rotor, à savoir dans la présente invention le carrousel 2. Ledit moteur rotatif peut comprendre un arbre de transmission soutenant ledit plateau 6 au travers d'au moins un roulement et/ou d'un réducteur. Ledit arbre peut être positionné en fixation au centre du plateau 6. En particulier, chaque roulement permet de limiter les chocs et reprendre les efforts appliqués sur l'arbre lors de l'entrée en contact d'un produit 1 avec ledit plateau 6, en particulier avec son bord périphérique 7 au moment d'une éjection.

En outre, un châssis 10 permet de relier le dispositif d'éjection 4 et de le fixer sur un autre composant structurel de l'installation. Ce châssis 10 peut être connecté aux moyens de motorisation 9 ou à un carter équipant le dispositif d'éjection 4.

Sur l'exemple de réalisation de la figure 1, le châssis 10 comprend au moins un bras ou une barre de maintien, s'étendant transversalement, au-delà du diamètre du plateau 6, pour venir être solidarisée sur la structure de l'installation. Outre le dimensionnement du dispositif d'éjection 4 et la forme de son plateau, le châssis 10 et sa barre permettent notamment de régler le placement dudit dispositif d'éjection 4. Comme visible, le dispositif d'éjection 4 est déporté latéralement par la barre du châssis 10, ménageant l'espace libre nécessaire à sa rotation et assurant le bon positionnement du plateau 6 pour assurer l'éjection et l'accompagnement des produits 1 au cours de sa rotation. Une telle liaison mécanique fixe par la barre du châssis 10 peut être requise dans un volume avec un encombrement réduit, comme c'est souvent le cas en sortie de convoyeur de type carrousel ou au sein d'une telle installation.

Par ailleurs, le diamètre du plateau 6 peut être déterminé pour que le corps d'un produit 1 ne vienne pas taper contre le moteur situé en dessous, notamment par contact et éjection au niveau du col d'une bouteille.

Il peut en être de même pour le dimensionnement de la concavité de chaque logement 8, permettant de recevoir intérieurement une partie du goulot d'une bouteille, sans que son corps entre en contact avec le moteur situé en dessous. A titre d'exemple, la distance radiale entre le centre du plateau 6 et le point le plus proche de la concavité de chaque logement 8 peut être au minimum supérieur à la moitié du diamètre d'un produit 1, préférentiellement d'une bouteille.

Comme évoqué précédemment, le contrôle de la rotation du plateau 6 du dispositif d'éjection 4 détermine l'éjection ou l'accompagnement de chaque produit 1 du flux. Pour ce faire, le dispositif d'éjection 4 comprend des moyens de synchronisation dudit entraînement avec le flux desdits produits 1. Les moyens de synchronisation permettent de faire tourner le plateau 6 à des vitesses différentes, en vue de positionner angulairement à un instant donné le bord périphérique 7 en croisement de la trajectoire de circulation ou bien de positionner un logement 8 au passage d'un produit 1 se déplaçant à cet endroit en suivant la trajectoire 3 de circulation.

Ainsi, selon l'invention, on entraîne la rotation dudit plateau 6 par rapport au déplacement dudit flux de produits 1, d'une part, de façon synchronisée, en positionnant angulairement un logement 8 de façon sensiblement tangentielle à ladite trajectoire 3 de circulation, de manière à accompagner le déplacement d'un produit 1 à l'intérieur dudit logement 8. Un exemple d'une telle synchronisation est représenté sur la figure 4.

Selon un mode de réalisation, de façon synchronisée, on peut positionner le bord périphérique 7 dans un intervalle entre deux produits 1 se succédant. Le plateau 6 est alors entraîné à une vitesse correspondante et fonction du défilement des produits 1, qui viennent s'insérer au moins partiellement dans deux logements 8 successifs. Les produits 1 sont accompagnés et restent sur leur trajectoire 3 de circulation. Alternativement, on entraîne la rotation dudit plateau 6 par rapport au déplacement dudit flux de produits 1, d'autre part, de façon déphasée, en positionnant angulairement un logement 8 dans un intervalle entre deux produits 1 se succédant, de manière à éjecter le produit 1 situé en amont par rapport au sens de déplacement dudit flux. Dans cette configuration, le bords périphérique 7 vient alors couper la trajectoire 3 de circulation, faisant obstacle à un produit 1 qui y circule, qui se retrouve alors éjecté. Un exemple d'un tel déphasage est représenté sur la figure 5.

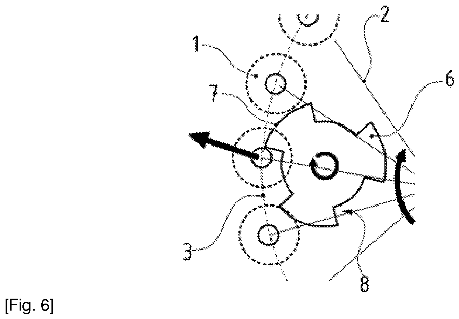

Un autre exemple de déphasage est représenté sur la figure 6, montrant un positionnement au moins partiel d'un logement 8 en accompagnement d'un produit 1, mais avec une vitesse de rotation du plateau 6 telle que le produit 1 circule le long du logement 8 et qu'il vient heurter le chant du logement 8.situé en aval par rapport au sens de circulation (i.e. le chant du logement 8 situé du côté du sens horaire de rotation du plateau 6 sur la figure 6).

Le passage de la synchronisation au déphasage, et inversement, peut s'effectuer par un contrôleur automatique, permettant d'accélérer ou de ralentir la vitesse de rotation appliquée au plateau 6, pour le positionner angulairement en éjection ou en accompagnement d'un desdits produits 1, c'est-à-dire un seul produit à la fois.

Selon un mode de réalisation, lesdits moyens de motorisation 9 peuvent comprendre un moyen de verrouillage dudit plateau 6 dans une position d'éjection desdits produits 1. Il est alors possible d'arrêter le plateau 6 pour qu'il obstrue continuellement la trajectoire 3 de circulation, provoquant l'éjection successive de tous les produits 1 qui y circulent. Un tel verrouillage peut être automatique, commandé par un contrôleur pour faire tourner le plateau 6 à une position indexée d'arrêt, notamment en cas d'arrêt d'urgence.

Additionnellement, lesdits moyens de motorisation 9 peuvent être tournés manuellement par un opérateur, afin de les amener dans une position angulaire déterminée, en éjection ou en accompagnement.

Ainsi, le dispositif d'éjection 4 et son procédé de mise en oeuvre permettent d'extraire ou d'accompagner un produit 1 d'un flux se déplaçant au sein d'une installation selon l'invention. En particulier, en faisant obstacle à sa progression, le positionnement angulaire du bord périphérique 7 ou d'un logement 8 du plateau 6 en gérant sa mise en rotation, assure une force d'éjection suffisante pour sortir un produit 1 du flux, en particulier en appliquant une force d'éjection supérieure à la force de préhension d'un convoyeur de type carrousel pourvu de moyens de préhension.

## Revendications

1. Dispositif d'éjection (4) de produits (1) au sein d'une unité de traitement desdits produits, un flux desdits produits (1) se déplaçant les uns derrière les autres selon une trajectoire (3) de circulation,
ledit dispositif d'éjection (4) comprenant au moins :
- un moyen d'éjection (5) à l'unité d'un produit (1) hors de ladite trajectoire (3) de circulation ;
- des moyens de motorisation (9) du moyen d'éjection (5),
- ledit moyen d'éjection (5) comprenant au moins un plateau (6) avec un bord périphérique (7) pourvu d'au moins un logement (8) de réception d'un unique produit (1) ;
- lesdits moyens de motorisation (9) comprenant un entraînement en rotation dudit plateau (6) et des moyens de synchronisation dudit entraînement avec le flux desdits produits (1),
**caractérisé en ce que** lesdits moyens de synchronisation permettent de faire tourner le plateau (6) à des vitesses différentes, en vue de positionner angulairement à un instant donné le bord périphérique (7) en croisement de la trajectoire de circulation ou bien de positionner un desdits logement (8) au passage d'un produit (1) se déplaçant à cet endroit en suivant la trajectoire (3) de circulation.

2. Dispositif d'éjection (4) selon la revendication 1, **caractérisé par le fait que** ledit plateau comprend au moins trois logements répartis régulièrement le long du bord périphérique.

3. Dispositif d'éjection (4) selon l'une quelconque des revendications précédentes, **caractérisé par le fait que** chaque logement (8) présente une concavité conformée complémentairement à au moins une partie de la forme de chacun desdits produits (1), de manière à introduire au moins partiellement ladite partie de ladite forme à l'intérieur dudit logement (8).

4. Dispositif d'éjection (4) selon l'une quelconque des revendications précédentes, **caractérisé par le fait que** lesdits moyens de motorisation (9) comprennent un moteur rotatif avec un arbre de transmission soutenant ledit plateau (6) au travers d'au moins un roulement et/ou d'un réducteur.

5. Dispositif d'éjection (4) selon l'une quelconque des revendications précédentes, **caractérisé par le fait que** lesdits moyens de motorisation (9) comprennent un moyen de verrouillage dudit plateau (6) dans une position d'éjection desdits produits (1).

6. Installation au sein d'un ligne industrielle de production et de traitement de produits (1), comprenant :
- au moins un convoyeur déplaçant selon une trajectoire (3) de circulation lesdits produits (1) les uns derrière les autres sous forme d'un flux de produits ;
- au moins un dispositif d'éjection (4) desdits produits (1) selon l'une quelconque des revendications précédentes,
- chaque dispositif d'éjection (4) étant positionné aux abords dudit convoyeur, **caractérisé par le fait que** chaque plateau (6) de chaque dispositif d'éjection (4) est positionné au moins:
- selon une position angulaire d'éjection d'un produit (1), avec son bord périphérique (7) qui s'étend au moins partiellement en croisement de ladite trajectoire (3) de circulation dudit convoyeur ;
- selon une autre position angulaire d'accompagnement d'un produit (1), avec au moins un logement (8) avec une concavité laissant au moins partiellement libre ladite trajectoire (3) de circulation dudit convoyeur.

7. Procédé d'éjection de produits au sein d'une unité de traitement desdits produits (1), dans lequel :
- un flux de produits (1) est déplacé les uns derrière les autres à intervalle régulier est déplacé selon une trajectoire (3) de circulation ;
- on positionne à un endroit de ladite trajectoire (3) de circulation au moins un dispositif d'éjection (4) comprenant au moins un plateau (6) avec un bord périphérique (7) pourvu d'au moins un logement (8) de réception d'un unique produit (1) ;
- on entraîne en rotation ledit plateau (6) ;
**caractérisé par le fait que**, au moins :
- on positionne ledit plateau (6) avec le bord périphérique (7) en croisement de ladite trajectoire (3) de circulation ;
et **par le fait qu'**on entraîne la rotation dudit plateau (6) par rapport au déplacement dudit flux de produits (1) :
- de façon synchronisée, en positionnant angulairement un logement (8) de façon sensiblement tangentielle à ladite trajectoire (3) de circulation, de manière à accompagner le déplacement d'un produit (1) à l'intérieur dudit logement (8) ; ou
de façon déphasée, en positionnant angulairement un logement (8) dans un intervalle entre deux produits (1) se succédant, de manière à éjecter le produit (1) situé en aval par rapport au sens de déplacement dudit flux.

8. Procédé d'éjection selon la revendication 7, **caractérisé en ce que** de façon synchronisée, on positionne le bord périphérique (8) dans un intervalle entre deux produits (1) se succédant.

## Patentansprüche

1. Vorrichtung zum Ausstoßen (4) von Produkten (1) innerhalb einer Einheit zur Verarbeitung dieser Produkte, wobei sich ein Strom von aufeinander folgenden Produkten (1) entlang eines Umlaufweges (3) bewegt,
wobei die Vorrichtung zum Ausstoßen (4) mindestens umfasst:
- ein Mittel zum Ausstoßen (5) eines einzelnen Produkts (1) aus dem Umlaufweg (3);
- Motorisierungsmittel (9) für das Ausstoßmittel (5);
- wobei das Ausstoßmittel (5) mindestens eine Platte (6) mit einem Umfangsrand (7) umfasst, der mit mindestens einem Aufnahmesitz (8) zur Aufnahme eines einzelnen Produkts (1) versehen ist;
- wobei die Motorisierungsmittel (9) einen Drehantrieb für die Platte (6) und Mittel zur Synchronisation dieses Antriebs mit dem Strom der Produkte (1) umfassen,
**dadurch gekennzeichnet, dass** die Mittel zur Synchronisation ermöglichen zu bewirken, dass sich die Platte (6) mit unterschiedlichen Geschwindigkeiten dreht, um zu einem gegebenen Zeitpunkt den Umfangsrand (7) winkelmäßig so zu positionieren, dass er den Umlaufweg kreuzt, oder auch einen der Aufnahmesitze (8) in den Durchlaufweg eines Produkts (1) zu positionieren, das sich, während es dem Umlaufweg (3) folgt, zu dieser Stelle bewegt.

2. Vorrichtung zum Ausstoßen (4) nach Anspruch 1, **dadurch gekennzeichnet, dass** die Platte mindestens drei Aufnahmesitze umfasst, die gleichmäßig entlang des Umfangsrandes verteilt sind

3. Vorrichtung zum Ausstoßen (4) nach einem der vorhergehenden Ansprüche, **dadurch gekennzeichnet, dass** jeder Aufnahmesitz (8) eine Konkavität aufweist, die komplementär zu wenigstens einem Teil der Form jedes der Produkte (1) ausgebildet ist, um diesen Teil der Form wenigstens teilweise ins Innere des Aufnahmesitzes (8) einzuführen.

4. Vorrichtung zum Ausstoßen (4) nach einem der vorhergehenden Ansprüche, **dadurch gekennzeichnet, dass** die Motorisierungsmittel (9) einen Rotationsmotor mit einer Antriebswelle umfassen, welche über mindestens ein Wälzlager und/oder ein Untersetzungsgetriebe die Platte (6) abstützt.

5. Vorrichtung zum Ausstoßen (4) nach einem der vorhergehenden Ansprüche, **dadurch gekennzeichnet, dass** die Motorisierungsmittel (9) ein Mittel zur Verriegelung der Platte (6) in einer Position des Ausstoßens der Produkte (1) umfassen.

6. Anlage innerhalb einer industriellen Linie zur Produktion und Verarbeitung von Produkten (1), welche umfasst:
- mindestens einen Förderer, der die Produkte (1) hintereinander in Form eines Produktstroms entlang eines Umlaufweges (3) bewegt;
- mindestens eine Vorrichtung zum Ausstoßen (4) der Produkte (1) nach einem der vorhergehenden Ansprüche,
- wobei jede Vorrichtung zum Ausstoßen (4) am Rand des Förderers positioniert ist,
**dadurch gekennzeichnet, dass** jede Platte (6) jeder Vorrichtung zum Ausstoßen (4) mindestens positioniert ist:
- in einer Winkelposition des Ausstoßens eines Produkts (1), derart, dass sich ihr Umfangsrand (7) wenigstens teilweise so erstreckt, dass er den Umlaufweg (3) des Förderers kreuzt;
- in einer anderen Winkelposition der Begleitung eines Produkts (1), derart, dass sie mit mindestens einem Aufnahmesitz (8) mit einer Konkavität den Umlaufweg (3) des Förderers wenigstens teilweise frei lässt.

7. Verfahren zum Ausstoßen von Produkten innerhalb einer Einheit zur Verarbeitung dieser Produkte (1), wobei:
- ein Strom von in gleichmäßigen Abständen aufeinander folgenden Produkten (1) entlang eines Umlaufweges (3) bewegt wird;
- an einer Stelle des Umlaufweges (3) mindestens eine Vorrichtung zum Ausstoßen (4) positioniert wird, die mindestens eine Platte (6) mit einem Umfangsrand (7) umfasst, der mit mindestens einem Aufnahmesitz (8) zur Aufnahme eines einzelnen Produkts (1) versehen ist;
- die Platte (6) drehend angetrieben wird;
**dadurch gekennzeichnet, dass** mindestens:
- die Platte (6) so positioniert wird, dass der Umfangsrand (7) den Umlaufweg (3) kreuzt;
und dadurch, dass die Drehung der Platte (6) in Bezug auf die Bewegung des Stroms von Produkten angetrieben wird:
- auf synchronisierte Weise, indem ein Aufnahmesitz (8) im Wesentlichen tangential zu dem Umlaufweg (3) winkelpositioniert wird, um die Bewegung eines Produkts (1) im Inneren des Aufnahmesitzes (8) zu begleiten; oder
phasenverschoben, indem ein Aufnahmesitz (8) in einem Intervall zwischen zwei aufeinander folgenden Produkten (1) winkelpositioniert wird, um das bezüglich der Bewegungsrichtung des Stroms stromabwärts befindliche Produkt (1) auszustoßen.

8. Verfahren zum Ausstoßen nach Anspruch 7, **dadurch gekennzeichnet, dass** auf synchronisierte Weise der Umfangsrand (7) in einem Intervall zwischen zwei aufeinander folgenden Produkten (1) positioniert wird.

## Claims

1. Ejection device (4) for ejecting products (1) in a unit for processing said products, a flow of said products (1) being displaced one behind the other along a circulation path (3),
said ejection device (4) comprising at least:
- an ejection means (5) for unitarily ejecting a product (1) out of said circulation path (3);
- motorization means (9) for motorizing the ejection means (5),
- said ejection means (5) comprising at least one plate (6) with a peripheral edge (7) provided with at least one recess (8) for receiving a single product (1);
- said motorization means (9) comprising a drive rotating said plate (6) and means for synchronizing said drive with the flow of said products (1),
**characterized in that** said synchronization means make it possible to rotate the plate (6) at different speeds, in order to angularly position the peripheral edge (7) at a given instant on crossing the circulation path or else position one of said recesses (8) when a product (1) being displaced passes this point in following the circulation path (3).

2. Ejection device (4) according to Claim 1, **characterized in that** said plate comprises at least three recesses distributed regularly along the peripheral edge.

3. Ejection device (4) according to either one of the preceding claims, **characterized in that** each recess (8) has a concavity shaped to complement at least a part of the form of each of said products (1), so as to at least partially introduce said part of said form into said housing (8).

4. Ejection device (4) according to any one of the preceding claims, **characterized in that** said motorization means (9) comprise a rotary motor with a transmission shaft supporting said plate (6) through at least one rolling bearing and/or one reducing gear.

5. Ejection device (4) according to any one of the preceding claims, **characterized in that** said motorization means (9) comprise a means for locking said plate (6) in a position of ejection of said products (1).

6. Installation in an industrial line for producing and processing products (1), comprising:
- at least one conveyor displacing along a circulation path (3) said products (1) one behind the other in the form of a flow of products;
- at least one ejection device (4) for ejecting said products (1) according to any one of the preceding claims,
- each ejection device (4) being positioned around the edges of said conveyor,
**characterized in that** each plate (6) of each ejection device (4) is positioned at least:
- according to an angular position of ejection of a product (1), with its peripheral edge (7) which extends at least partially crossing said circulation path (3) of said conveyor;
- according to another angular position of following of a product (1), with at least one recess (8) with a concavity leaving said circulation path (3) of said conveyor at least partially free.

7. Method for ejecting products in a unit for processing said products (1), wherein:
- a flow of products (1) is displaced one behind the other at regular intervals along a circulation path (3);
- at least one ejection device (4) comprising at least one plate (6) with a peripheral edge (7) provided with at least one recess (8) for receiving a single product (1) is positioned at a point of said circulation path (3) ;
- said plate (6) is driven in rotation;
**characterized in that**, at least:
- said plate (6) is positioned with the peripheral edge (7) crossing said circulation path (3);
and **in that** said plate (6) is driven in rotation with respect to the displacement of said flow of products (1):
- in a synchronized manner, by angularly positioning a recess (8) substantially tangentially to said circulation path (3), so as to follow the displacement of a product (1) into said recess (8);
or
in a phase-shifted manner, by angularly positioning a recess (8) within an interval between two products (1) following one another, so as to eject the product (1) situated downstream with respect to the direction of displacement of said flow.

8. Ejection method according to Claim 7, **characterized in that**, in a synchronized manner, the peripheral edge (8) is positioned within an interval between two products (1) following one another.
